# EUROPEAN PATENT APPLICATION

(11) **EP 4 597 043 A1**
(43) Date of publication of application: **06.08.2025**
(21) Application number: 24154935.1
(22) Date of filing: 31.01.2024
(51) Int. Cl.: G01D 5/245, H02K 41/00

(54) **TRANSPORT SYSTEM AND METHOD FOR OPERATING THE TRANSPORT SYSTEM**

(71) Applicant: ABB Schweiz AG, 5400 Baden (CH)
(72) Inventor: Forthuber, Friedrich, 5144 Handenberg (AT); Almeder, Alexander, 3910 Zwettl (AT)
(74) Representative: Patentanwälte Pinter & Weiss OG

(57) **Abstract**

The invention relates to an electromagnetic transport system (1) as well as to a method for operating the transport system (1). The transport system (1) comprises a fixed part or stator (2) and at least one movable part or mover (3), which is movable with respect to the stator (2) along a predetermined transport path, e.g., in at least one direction (x) of movement. The transport system (1) also comprises a first positioning system with position sensors (5) arranged on the stator (2), which interact with a first encoder track (6) of the at least one mover (3) to determine a first position information (PI1), from which a position, in particular an absolute position, of the at least one mover (3) can be determined. In addition to the first positioning system, the transport system (1) comprises a second positioning system in at least one predetermined zone (7) of the transport system (1). That second positioning system comprises at least one sensor unit (9) which is arranged in the at least one predetermined zone (7), wherein the sensor unit (9) is set up to detect or scan a second encoder track (8, 81, 82) attached to the at least one mover (3) to determine second position information (PI2), with which the position, in particular the absolute position, of the at least one mover (3) can additionally be determined in the at least one predetermined zone (7) with a higher accuracy grad than with the first position information (PI1) determined by the first positioning system. Furthermore, the second encoder track (8, 81, 82) attached to the at least one mover (3) is designed in such a way that the second position information (PI2) determined by the at least one sensor unit (9) can be used to determine unique and mover-specific identification information (ID, ID₃₁, ID₃₂).

## Description

### TECHNICAL FIELD OF THE INVENTION

The present invention relates to an electromagnetic transport system with a fixed part or stator and at least one movable part or mover, which is movable with respect to the stator along a predetermined transport path, the transport system comprising a first positioning system with position sensors arranged on the stator, which interact with a first encoder track on the at least one mover in such a way that first position information is determined, from which a position, in particular an absolute position, of the at least one mover along the predetermined transport path can be determined. Furthermore, the present invention relates to a method for operating an electromagnetic transport system.

### BACKGROUND INFORMATION

Nowadays, in most of the modern manufacturing and production facilities, it is necessary to move components, workpieces, products, etc. between the individual handling and production stations using transport equipment. Various transport and conveying devices, are used for the transport of the components, workpieces, products, etc. Continuous conveyors or conveyor belts in different designs can be used as transport and conveying devices, which convert a rotary movement of an electric drive into a linear movement. However, the flexibility of such continuous conveyors or conveyor belts is considerably limited, in particular the individual transport of single transport units is not possible. So, electromagnetic transport systems in the form of long stator linear motors (or short: LLM) and/or in the form of planar motors (short: PM) become more frequently used to meet the requirements of modern and flexible transport equipment in manufacturing and production facilities.

Long stator linear motors and planar motors as well as their applications and their mode of operation are well known from the state of the art. Both motors - a long stator linear motor and a planar motor - comprise at least one movable part, which is also referred to as mover or shuttle or transport unit, and a fixed part (the stator), with respect to which the at least one movable part or mover is moved due to interacting magnet fields in at least one direction of movement. For this purpose, drive magnets, either an electromagnets or permanent magnets, are arranged on one of the parts, e.g., the mover. The drive magnets interact with the magnetic field generated by energized drive coils on the other part to generate a propulsive force. If a voltage is applied to the drive coils, a magnetic field is generated, which interacts with the magnetic field of the drive magnets, thereby generating a force, which moves the movable part or the mover. A moving magnetic field is generated by appropriate control of energizing the drive coils to move the mover along a predefined path along a transport track or within a transport plane.

A long stator linear motor generally comprises a fixed part or stator, which is usually composed of a large number of stator segments. The drive coils are usually arranged in fixed positions to each other on the stator or on the stator segments. The stator segments can have different geometries (e.g., straight lines, curves, track switches, etc.) and can be assembled into a desired stator by lining them up accordingly. The stator then forms the transport track or transport path, along which at least one mover, usually several movers, is moved. For this purpose, a number of drive magnets is arranged on the mover, wherein the magnetic field of the drive magnets interact with the electromagnetic field generated by energizing the drive coils of the stator. LLMs are known, for example, from WO 2013/143783 A1 or US2013/0074724 A1.

Planar motors, which are used, for example, in production processes or transport processes requiring complex motion profiles, also have a stator like long stator linear motors. However, the stator of the planar motor forms a transport plane, in which one or more movers can be moved at least two-dimensionally. The drive coils of the planar motor are therefore arranged in the transport plane, in some embodiments also in several planes. A drive force acting on the mover is generated - similar to the long stator linear motor - to move the mover e.g., along a predefined transport path within the transport plane. For this purpose, a magnetic field, which is generated e.g., by drive magnets of the mover, interacts with a magnetic field of the stator generated by energizing the drive coils accordingly. US 9,202,719 B2 or WO 2019/129576 A1, for example, disclose the basic structure and mode of operation of a planar motor.

Since the basic motor principle of a long stator linear motor or of a planar motor is well known, so there is no need to go into further details here.

To control the movement of the movers along the predefined transport path within electromagnetic transport system, either in the form of a long stator linear motor or in the form of a planar motor, it is advantageous to know a current position, in particular an absolute position, of the mover with respect to the fixed part or stator. The knowledge of the current position of the mover enables to correctly control the drive coils for generating the moving magnetic field. The determination of the position of the mover is therefore particular important for the operation of the electromagnetic transport system. Furthermore, the knowledge of the current position of the mover with respect to the stator can be used to accurately position the mover on the transport track or on the transport plane, especially in work stations. Movers of a transport system may move different objects (e.g., loads, components, products, workpieces or packaging units like e.g., bottles, containers, etc.) between individual work stations arranged along the transport path of the movers. To guarantee a correct and error-free handling of the objects in the respective work station, the respective mover has to be accurately positioned.

A respective position of the mover in the electromagnetic transport system can usually be determined by an encoder system or positioning system. For this purpose, the mover may have an encoder track, which interacts with position sensors of the positioning system. Optically or inductively scannable units (e.g., measuring scales or scannable codes, etc.), or magnet units, so called position magnets, may be used as encoder tracks to determine a position of the mover in the transport system. Depending on the encoder track used, position sensors (e.g., optical sensors, camera units, inductive sensors, magneto-resistive sensors, AMR sensors, Hall effect sensors, etc.) may be provided, e.g., arranged along or on the stator of the transport system. The position sensors interact with encoder tracks on the movers to determine a position information, which can be used to derive the respective position of the respective mover in the transport system. Usually, an absolute position of the mover in the transport system is determined. For example, the drive magnets of the mover may be used as encoder track designed as magnet unit. Alternatively, the mover may have position magnets or another encoder track (e.g., an optically or inductively scannable encoder track), separate from the drive magnets, to determine the absolute position of the mover with respect to the stator. Methods and systems for determining the position of a mover with respect to a fixed stator of a transport system are known from prior art, such as US 6,876,107 B2 or EP 3 376 166 A1 or WO 2021/105387 A1, for example.

US 6,876,107 B2, for example, discloses the determination of an absolute position of a mover of a long stator linear motor with an additional position magnet arranged on the mover. A large number of position sensors (e.g., magneto-resistive sensors) are arranged along the stator to detect the magnetic field of the position magnet. However, a lot of position sensors have to be arranged quite closely together to ensure an accurate determination of the mover's position, which is necessary for a very precise positioning of the mover, especially in the area of a work station.

The transport system for determining the position of a mover disclose by EP 3 376 166 A1 or by WO 2021/105387 A1 uses the drive magnets of the mover are used to determine the position. The position sensors (e.g., magneto-resistive sensors, Hall effect sensor) are arranged along the stator, but they may only be used to determine a position of the mover relative to the position sensor. The absolute position of the mover is calculated based on the known mounting position of the position sensor, the known geometry of the mover (e.g., number and/or width of magnets, pole pitch, etc.) and the determined relative position of the mover, wherein the accuracy of the determined absolute position of the mover depends on the number and/or spacing of the position sensor and the specified sensor resolution, for example. Although this position determination may work quite reliably, it also has certain weaknesses. In particular, the accuracy of the determined absolute position of the mover, which depends on e.g., the specified sensor resolution, may be too imprecise, for example, for handling operation in work stations (e.g., robot handling of object, pick and place-operation, etc.) which require precise positioning of the mover. Additionally, the position sensors, which are mounted between and/or adjacent to the drive coils along the stator, may be influenced by the magnetic field of the drive coils and/or the increase of temperature during the operation of the drive coils. This may influence the reliability and accuracy of the position measurement and lead to difficulties in case precise positioning of the mover is needed.

Additionally, it may be desirable to uniquely identify the individual movers moving on the stator of the transport system, e.g., to track the mover itself or an object transported by the mover. A mover may comprise a unique identification unit or unique identifier, for example in the form of a barcode, a QR code, a readable memory chip, a RFID-tag or any printed, glued and/or engraved alphanumeric code, for individual differentiation and identification. I.e., an additional identification unit has to be attached to the mover, which leads to an additional step during the assembly of the mover and to additional costs. WO 2020/025359 A1 discloses a method for identifying the mover of a linear transport system, wherein the movers comprise different magnetic field generators (e.g., additional magnets) generating different magnetic field vectors to identify the movers.

However, all these identification units used to identify the movers have in common that one or more identification detection devices or sensors have to be arranged along the transport path to enable the identification of the individual movers, when the individual movers pass the corresponding identification detection device or sensor. So, the disadvantage of these identification options is that separate hardware - e.g., for at least one identification detections device or sensor, which may detect or read the unique identifiers of the movers - has to be provided additionally in the transport system. Furthermore, the movers first have to be moved to this additional hardware, e.g., detection device or sensor, to be identified. Depending on the respective position of that hardware, the movers may have to be move significantly, which may take a considerable amount of time to identify the movers.

### SUMMARY

The objective of the present disclosure is to provide a transport system and a method for operating the transport system, which, in addition to enabling precise and accurate determination of an absolute position of each of the movers of the transport system in at least one predefined zone of the transport system, also enable each of the movers of the transport system to be uniquely identified in simple and effective manner.

These and other objectives are solved by a transport system and method for operating the transport system according to the independent claims. Advantageous embodiments of the present invention are described by the dependent claims.

According to the invention, these and other objectives are achieved by an electromagnetic transport system, which comprises - in addition to a first positioning system - a second positioning system in at least one predetermined zone; the second position system comprising at least one sensor unit, which is arranged in the at least one predetermined zone, wherein the at least one sensor unit is set up to detect or scan a second encoder track attached to the at least one mover to determine a second position information, with which - in the at least one predetermined zone - the position, in particular the absolute position, of the at least one mover can additionally be determined with a higher accuracy grad that with the first position information of the first positioning system, and wherein the second encoder track attached to the at least one mover is designed in such a way that a unique and mover-specific identification information can be determined or is derivable from the second position information.

The main aspect of the present invention is that due to the second positioning system the transport system enables positioning the at least one mover with a higher accuracy than with the first positioning system, alone - at least in the predefined zone (e.g., work station). Since the second positioning system has a higher accuracy grad (e.g., only a few micrometers) than the first positioning system (e.g., about 0,1 mm), the measurement tolerance or the measurement error of at the second positioning system is lower or smaller than that of the first positioning system and the mover can be positioned with a significantly higher accuracy. Furthermore, influences (e.g., temperature, etc.) which negatively affects the positioning accuracy of the first positioning system are reduces or avoided. Especially in zone of the transport system like workstations, in particular workstations with handling operations, pick- and-place operations, etc., which require precise and very accurate positioning of the mover, the mover can be positioned with high accuracy. In addition, the second positioning system can be used - especially with transport systems in the form of a long stator linear motor - to check the orientation of the mover on the transport track formed by the stator, for example, to avoid malfunctions of the transport system.

Furthermore, the transport system enables simple and efficient identification of the movers moving along the stator, due to the design of the second encoder track of the respective movers and on the second position information based on that second encoder track. The second positioning system provides second position information, which is used to determine a mover-specific identification information to identify the mover. The mover-specific identification information can be derived either from the second position information alone or in combination with the first position information provided by the first positioning system - depending on the design of the second positioning system. The identification of the movers can be carried out in parallel to the more precise determination of the position of the respective mover or it can also be carried out separately from the position determination - e.g., in one or more specific predefined zones of the transport systems (e.g., in-feed stations for movers, out-feed station for the movers), which differ from the predefined zones requiring higher positioning accuracy. Ideally, the identification of the mover can be used to determine mover-specific information, which can be used, for example, for even more precise positioning of the respective mover and/or to improve production processes or for maintenance of the respective mover.

It is advantageous, when the transport system comprises at least one evaluation unit. The evaluation unit can be used for determining the position, in particular the absolute position, of the at one mover in the transport system from the first position information of the first positioning system. Additionally or alternatively, the evaluation unit can be used for determining the position, in particular the absolute position, of the at least one mover from the second position information of the second positioning system and/or for determining the unique and mover-specific identification information from the second position information to identity the at least one mover. I.e., that the transport system may comprise an evaluation unit, which is designed to evaluate the position information of both positioning systems and which is also designed to identify the at least one mover. It is also possible that the transport system may comprise several evaluation units, which are designed to fulfil different tasks - e.g. one or more evaluation unit, which determine the position of the mover from the first position information of the first positioning system, one or more evaluation units, which determine the position of the mover from the second position information of the second positioning system and/or which identify the movers of the transport system based on the second position information. This may be applicable and reasonable especially for large transport systems. Furthermore, the at least one evaluation unit may be integrated in a control unit of the transport system, but it may also be designed a separate unit.

Ideally, the transport system comprises a memory unit, which is either integrated in the at least one evaluation unit or which is designed as separate memory unit. The memory unit may be used for storing mover-specific information of the at least one mover, which is retrievable using the unique and mover-specific identification information. This mover-specific information may be used by the evaluation unit for further processing, e.g., to improve the determination of the mover-position or it may be transmitted to other units (e.g., control units, higher-level controllers, etc.) of the transport system and/or it may be output by an output unit and displayed to a user. The mover-specific information may comprise further properties of the mover, like, e.g., dimensions, weight, load status, maintenance data, production data, serial number of the mover, milage, etc., for example. It may also comprise information for more precise determination of the respective mover like e.g., a reference position, a position of the second encoder track on the mover, a zero position for the second encoder track, etc. Additionally, the mover-specific information may also comprise product-specific data of the product or object transported by the mover and/or information on the specific production process (e.g., single piece flow).

In a preferred embodiment of the transport system, the second positioning system is designed as linear position encoder system, wherein a read head is used as sensor unit and wherein the second encoder track of the at least one mover is a part of a measuring scale which covers mover-specifically a distinct and individual part of the position range of the measuring scale. In this advantageous embodiment of the transport system each mover of the transport system is attached its distinct and individual part of the measuring scale of the second positioning system, wherein the respective part of the measuring scale attached to each mover covers a different part of the position range of the measuring scale. I.e., the distinct and individual position range of the second encoder track of each mover is used as unique and mover-specific identification information to identity the movers.

In another preferred embodiment of the transport system, the second positioning system is also designed as linear position encoder system, wherein a read head is used as sensor unit, but the second encoder track, which is a measuring scale covering a position range, is attached with a distinct and mover-specific offset to the at least one mover. I.e., that identical measuring scale may be attached as second encoder tracks to the movers of the transport system, but the position of the second encoder track on each mover is unique and mover-specific. Each mover may be easily identified by the offset of the second encoder track, which may be determined on the basis of a deviation between the mover position determined by the first positioning system and the mover position determined by the second positioning system, wherein the first position information and the second position information are combined to determine the mover-specific offset.

Furthermore, the objectives given above are achieved by a method for operating an electromagnetic transport system, wherein in at least one predetermined zone of the transport system, a sensor unit of a second positioning system detects or reads in a unique and mover-specific second encoder track attached to the at least one mover, wherein a second position information is determined and wherein the position, in particular the absolute position, of the at least one mover is additionally determined with a higher accuracy grad than with the first position information determined by the first positioning system. Furthermore, unique and mover-specific identification information is determined from the second position information, wherein the second position information is derived from the mover-specifically designed second encoder track. Ideally, the second encoder track is at least a part of a measuring scale, which either covers mover-specifically a distinct and individual part of the position range or which is attached with a distinct and mover-specific offset to the mover. The mover-specific part of the position range of the measuring scale or the mover-specific offset of the second encoder track may be used as mover-specific identification information.

The method enables an accurate and precise positioning of the mover, in particular in the predefined zone of the transport system, and an additional identification of the respective mover in an efficient and simple manner.

It is also advantageous, if the unique and mover-specific information is used to retrieve mover-specific information from a memory unit.

### BRIEF DESCRIPTION OF THE DRAWINGS

In the following, the present invention will be described in greater detail with reference to Figures 1 to 3, which show exemplary, schematic and non-limiting advantageous embodiments of the invention. In the drawings:
Fig. 1 shows an electromagnetic transport system according to the invention with a first and second positioning system;
Fig. 2a shows a preferred embodiment of the electromagnetic transport system according to the invention;
Fig. 2b shows another preferred embodiment of the electromagnetic transport system according to the invention;
Fig. 3 shows a flowchart of a method for operating the electromagnetic transport system according to the invention.

### DETAILED DESCRIPTION

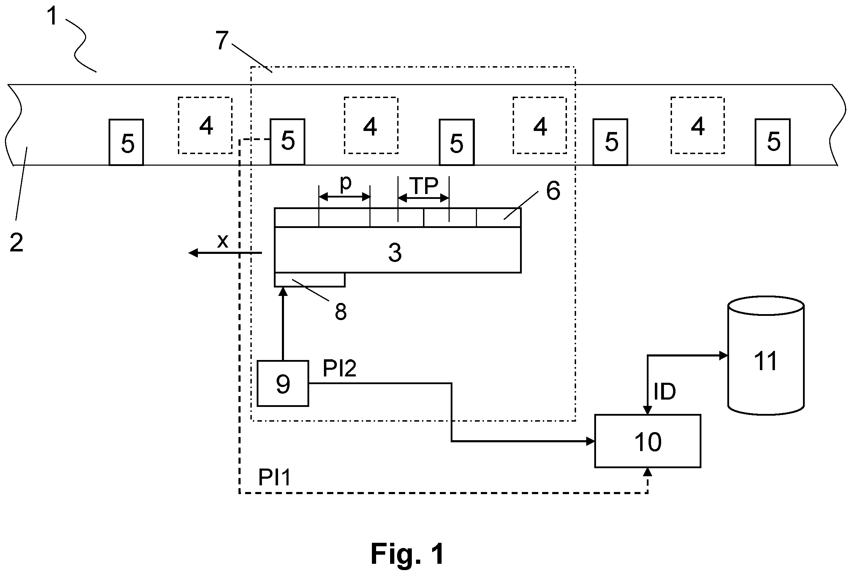

Figure 1 shows an electromagnetic transport system 1, e.g., long stator linear motor or planar motor, which comprises a fixed part 2 and at least on moveable part 3. The fixed part 2 or stator 2 is usually composed of a large number of stator segments. The movable part 3 or mover 3 can be moved with respect to the (fixed) stator 2 due to interacting magnet fields. For this purpose, drive coils 4 are arranged on the stator 2, as indicated by dashed lines in Figure 1. In case of an electromagnetic transport system 1 in the form of a long stator linear motor, the drive coils 4 are arranged next to one another in a direction x of movement of the mover 3. The stator 2 forms the transport track and thus predefines the transport path, along which the at least one mover 3 can be moved in the direction x of movement, for example. In case of an electromagnetic transport system 1 in the form of a planar motor, the drive coils 4 are arranged in a plane. The stator 2 thus forms a transport plane, on which the at least one mover 3 can be moved e.g., two-dimensionally along a predefined transport path.

A plurality of drive magnets is arranged on the mover 3. If the drive coils 4 of the stator 2 are energized in the range of the mover 3 (by application of an electrical voltage), e.g., under the control of a control unit (not shown in Figure 1), a drive magnetic field is generated. The generated drive magnetic field interacts with the magnetic field of the drive magnets of the mover 3 and generates a propulsive force on the mover 3. Thus, the mover 3 is moved along the predefined transport path given by transport track or on the transport plane formed by the stator 2. The drive magnets of the mover 3 may be permanent magnets or electromagnets. In the case of electromagnets used as drive magnets, permanent magnets could be provided on the fixed part 2 of the transport system 1 instead of drive coils 4. Since the motor principle of long stator linear motors and/or planar motors is well known, it will not discuss in detail here.

Furthermore, the transport system 1 comprises position sensors 5 which are arranged on the stator 2 of the transport system 1. The position sensors 5 may be arranged next to one another in one or more zones of the stator 2 or on the whole stator 2 forming the transport track or the transport plane of the transport system 1. Furthermore, a first encoder track 6 is provided on the at least mover 3 of the transport system 1. The position sensors 5 and the sensor track 6 form a first positioning system of the transport system 1. The first positioning system provides a first position information PI1 due to the interaction of the position sensors 5 and the first encoder track 6 of the mover 3. The first position information PI1 can be used to determine a current position of the respective mover 3 - e.g., an absolute position and/or a position of the mover 3 relative to the stator 2, wherein the position of the mover is provided with a certain accuracy grad. I.e., that the position is determined with a certain measurement tolerance or measurement error. The absolute position of the mover 3 is of course determined with regard to a known, generally fixed, reference position. For a transport system 1 in the form of a long stator linear motor, in which the movement of the mover 3 is often defined by a closed path (e.g., defined by the transport track), a point on the fixed track may defined the reference position. The mounting positions of the position sensors 5 are likewise known with regard to this known reference position.

The mover 3 can have several position magnets 6 (e.g., permanent magnet or electromagnets), which form the first encoder track 6. The drive magnets of the mover 3 can be used as position magnets 6, for example, as described in EP 3 376 166 A1, or the drive magnets and position magnets 6 are provided separately from one another on the mover 3. The first encoder track 6 provided by the mover 3, i.e., the magnet field of the position magnets 6, can be detected by the position sensors 5 arranged on the stator 2. This usually means that the position magnets 6 on the mover 3 are arranged facing the stator 2, and the position sensors 5, each with their active surface, are arranged facing the mover 3. The position magnets 6 do not have to be arranged directly adjacent to each other, as shown in Figure 1. A distance between two adjacent position magnets 6 is referred to as pole pitch TP, for example. The pole pitch TP can be equal to the position magnet width p or differ from it. Furthermore, the pole pitch TP can be smaller than a spacing of two adjacent position sensors, but the pole pitch TP does not necessarily have to be smaller than the spacing. Furthermore, the position magnets 6 can be arranged on the movable component 2 with alternating polarity. In the case of a planar motor, this results in such an array in a plane in two directions.

To determine the position of the mover 3, the position sensors 5 of the first positioning system measure the magnetic field of the position magnets 6, e.g., the magnitude and/or the direction of the magnetic field, in the range of the respective position sensor 5. Magneto-strictive sensors, magneto-resistive sensors (such as anisotropic magneto-resistive sensors or short: AMR-sensors, tunnel magneto-resistance sensors or giant magneto-resistance sensors) or Hall effect sensors can be used as position sensors 5, for example. In addition, further types of (magnet-)sensors that are capable of detecting a magnetic field can of course also be used as position sensors.

In Figure 1, for example, the respective position sensors 5, which are close to the position magnets 6 of the mover 3, may provide the first position information PI1, which is only shown for a first position sensor 5 in the range of the mover 3 or its first encoder track 6 in Figure 1, for reasons of clarity. The first position information PI1 may be a sensor signal (e.g., a voltage in form of a sin/cos pattern), for example, which is generated by the position sensor 5 (e.g., AMR-sensor, etc.) measuring the magnetic field of the first encoder track 6 of the mover 3, when the mover 3 moves over the position sensor 5. The first position information PI1 may be transmitted to an evaluation unit 10, for example. The evaluation unit 10 may be a part of a control unit of the transport system 1 or may be separate unit 10, which provides the position of the mover 3 within the transport system, determined from the first position information PI1, to a control unit of the transport system 1 or a higher-level control unit. Based on the pattern of the first position information PI1, a sensor signal cycle, e.g., a recurring sawtooth voltage, can be calculated, within which the position of a respective position magnet relative to the position sensor 5 may be determined, wherein every voltage of the sensor signal cycle, e.g., the sawtooth, may be associated with a distinct position of the respective position magnet 6 relative to the position sensor 5. Depending on the resolution of the sensor signal cycle in the evaluation unit 10, this position may be determined with more or less accurate resolution. Since the mounting position of the position sensor 5 (with regard to the known reference position) and the structural and geometric design of the mover 3 (e.g., number and/or width of magnets 6, pole pitch TP, etc.), are of course known, the absolute position of the mover 3 (with regard to the reference position) may thus be determined from the first position information PI1, provided by the first positioning system, with more or less accuracy. The accuracy grad or the measurement tolerance or the measurement error of the first positioning system may depend on the number of position sensors 5, the spacing of the position sensors 5, the resolution of the first position information PI1, etc., for example. Methods for determining the position of a mover 3 from the first position information PI1 provided by the first positioning system comprising magnet-sensors (e.g., magneto-resistive sensor, Hall effect sensor, AMR-sensors, etc.) as position sensors 5 arranged on the stator 2 and using position magnets 6 or drive magnets arranged on the mover 3 as first encoder track 6 are sufficiently known from EP 3 376 166 A1 or WO 2021/105387 A1, for example.

The transport system 1, shown in Figure 1, additionally comprises a second positioning system, which provides a second position information PI2 in at least predefined one zone 7 of the transport system 1 along the transport path, e.g., a section 7 of the transport track defining the transport path in a transport system 1 in the form of a long stator linear motor or an area 7 of the transport plane of a transport system 1 in the form of planar motor. The second position information PI2 of the second positioning system ideally can be provided with higher accuracy the first position information PI1 of the first positioning system. I.e., that the second positioning system may have a higher accuracy grad or a lower measurement tolerance or smaller measurement errors than the first positioning system. The second positioning system can therefore be used for more precise and accurate position determination and positioning of the mover 3 by the transport system 1, especially in zones 7 of the transport system 1, which require precise positioning of the mover 3 - e.g., like work stations, in particular work stations for handling operations on objects transported by the mover 3, pick-and-place-operations to load or unload the mover 3, etc.

The second positioning system comprises at least one sensor unit 9 (e.g., optical sensor unit, camera, inductive sensor unit, magnet sensor, etc.) and a second encoder track 8 attached to the mover 3, in addition to the first encoder track 6 of the first positioning system. The sensor unit 9 is arranged at a given mounting position (with regard to the known reference position) in the at least one zone 7 of a transport system 1, which requires precise positioning of the mover 3.

When the mover 3 is moved past the sensor unit 9 and/or passes the sensor unit 9, the sensor unit 9 detects or reads in or scans in the second encoder track 8 attached to the mover 3 and determines the second position information PI2 based on the second encoder track 8 (e.g., detected position on the second encoder track 8). The second position information PI2 may then be transmitted to the evaluation unit 10. The position (e.g., absolute position) of the mover 3 is then determined from the second position information PI2, using, for example, the mounting position of the second encoder track 8 on the mover 3 and the known mounting position of the sensor unit 9 in the predefined zone 7 with regard to the known reference position. The mover 3 may then be precisely positioned in the predefined zone 7 (e.g., work station) of the transport system 1 based on the position deriving from the second position information PI2, due to the second positioning system having a higher accuracy grad or a lower measurement tolerance or a lower measurement error than the first positioning system. The evaluation unit 10 may be the same evaluation unit 10 used to evaluate the first position information PI1 of the first positioning system (as shown in Figure 1, for reasons of clarity), but it is also possible, that the evaluation unit 10 is a separate evaluation unit 10, which is only used to determine the position of the mover 3 from the second position information PI2 of the second positioning system.

Furthermore, the second encoder track 8 attached to the mover 3 is also designed in such a way that the second position information PI2, determined by the sensor unit 9, comprises unique and mover-specific identification information ID, which can be determined by the evaluation unit 10 from the second position information PI2. The respective mover 3, to which the respective second encoder track 8 is attached, can thus be identified quite easily. The unique and mover-specific identification ID determined from the second position information PI2 may then be used to retrieve mover-specific information in a memory unit 11. Such mover-specific information may comprise, e.g., a reference position for precise position determination, a position of the second encoder track 8 on the mover 3 and/or further properties of the mover 3, like, e.g. dimensions, weight, load status, maintenance data, production data, serial number of the mover 3, milage, etc. Furthermore, the mover-specific information may also comprise product-specific data of the product or object transported by the mover 3 and/or information on the specific production process (e.g., single piece flow). The memory unit 11 can either be integrated with in the evaluation unit 10 or designed as separate memory unit 11, like exemplary shown in Figure 1. The retrieved, mover-specific information may be used by the evaluation unit 10 for further processing (e.g., improve the determination of the mover-position, etc.) or transmitted to another unit, e.g., a higher-level evaluation or control unit. Additionally or alternatively, the mover-specific information can be output on an output unit and displayed to a user.

The mover 3 may be identified in parallel to the determination of the position of mover 3 in the zone 7 of the transport system 1 based on the second position information PI2. Alternatively, the transport system 1, in particular the second positioning system may comprise another sensor unit 9 arranged in a different zone of the transport system 1 (e.g., in-feed station, out-feed station for movers 3) for identification of the movers 3 only. So, the transport system 1 may have predefined zones 7, where the second positioning system is only used for precise and accurate positioning of the at least one mover 3, and at least one predefined zone 7, where either the movers are only identified or additionally to the determination of their position are identified using the second positioning system. For example, several zones 7 (e.g., work stations along the transport path of the mover 3) may be predefined within the transport system 1, where the position of the mover 3 is determined by second positioning system, e.g., in addition to the position determination by the first positioning system to ensure higher positioning accuracy, but e.g., within only one of these predefined zones 7 the second positioning system may be used to identify the at least one mover 3 using the second position information PI2, based on the second encoder track 8 attached to the at least one mover 3.

The second positioning system of the transport system 1 may be an optical, magnetic or inductive encoder system, in particular a linear position encoder system. The sensor unit 9 may be designed a read head 8 capable to detect or read-in or scan the second encoder track 8 of the mover 3. The second encoder track 8 may be a measuring scale with optically or inductive scannable graduation elements, for example. The linear position encoder system used as second positioning system may be designed either as absolute encoder system, in which the measuring scale already contains an absolute position code, or as incremental encoder system, which has to be referenced once to obtain an absolute position information.

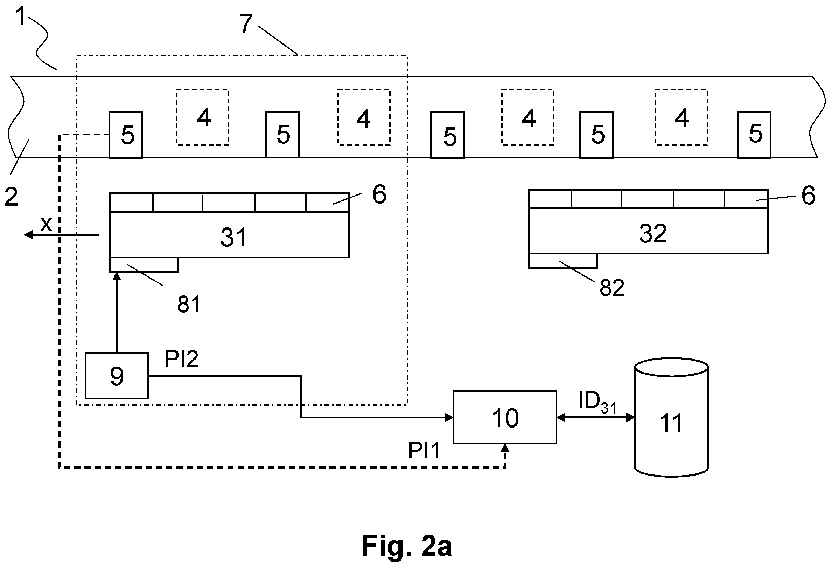

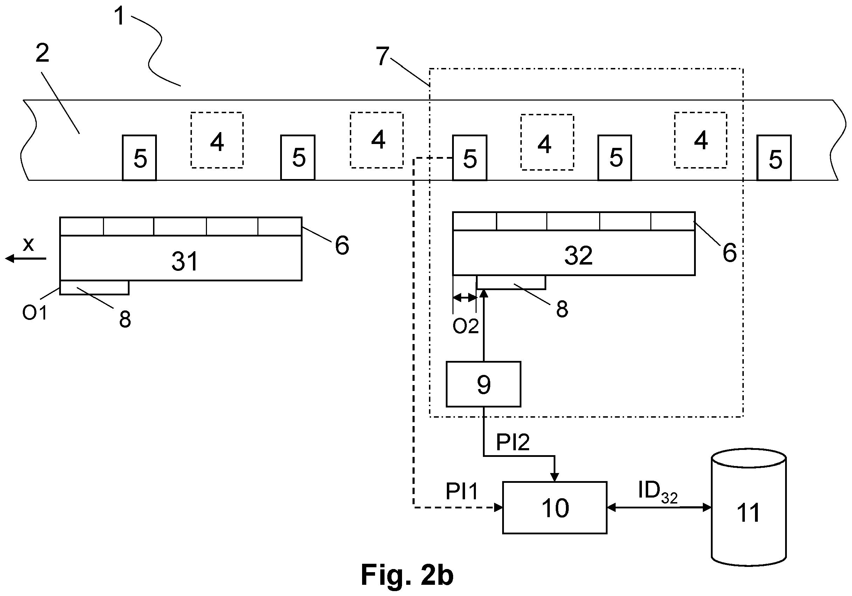

Preferred embodiments of the transport system 1, especially of the second positioning system, are shown exemplary and schematically in Figure 2a and 2b.

Figures 2a and 2b show the transport system 1 with the stator 2 and with two exemplary movers 31, 32. Both movers 31, 32 are movable with respect to the (fixed) stator 2 due to interacting magnet fields. The transport system 1 comprises the first positioning system formed by position sensors 5 arranged on the stator 2 and by the first encoder tracks 6 (e.g., position magnets or drive magnets) of the movers 31, 32. The first positioning system generates the first position information PI1, which can be used to determine the position of each of the movers 31, 32, in particular the absolute position of each of the mover 31, 32 (with regard to the known reference position). The determined position of each of the movers 31, 32 can be used to energized the drive coils 4 of the stator 2 and to move the movers 31, 32 in the direction x of movement, for example, along the predefined transport path.

Furthermore, the transport system 1 comprises the second positioning system, wherein a linear position encoder system, in particular an optical encoder system, is used as second position measuring system. The second positioning system or the optical encoder system provides the second position information PI2 in at least one zone 7 (e.g., work station) of the of a transport system 1. The second positioning system comprises at least one read head 9 as sensor unit 9, which is arranged in the at least one zone 7, and a measuring scale used as second encoder track 81, 82 on each of the movers 31, 32.

In Figure 2a, for example, an absolute coded measuring scale is used, wherein the maximum position range of the measuring scale is divided into several parts. Each part of the measuring scale covers a separate and distinct part of the position range of the measuring scale. For example, a first part of the measuring scale covers the partial position range for 0 to 10 mm, a second part of the measuring scale coves the partial position range from 10 to 20mm and so on. Each mover 31, 32 is assigned a different part of the measuring scale by attaching the respective part of the measuring scale to the respective mover 31, 32 as second encoder track 81, 82. For example, the first part of the measuring scale covering a first part of position range (e.g., 0 to 10mm) is attached to a first mover 31 as second encoder track 81 of the first mover. The second part of the measuring scale covering a second partial position range (e.g., 10 to 20mm) is attached to the second mover 32 as second encoder track 82 of the second mover. So, each of the movers 31, 32 of the transport system 1 has a distinct, individual and mover-specific second encoder track 81, 82 covering a different position range of the measuring scale used.

Additionally, the position limits of the different partial position ranges or parts of the measuring scale are recorded, for example, in a list or table, which can be stored in the memory unit 11. The list or table may also contain unique identification information ID₃₁, ID₃₂ of the respective movers 31, 32, like e.g., a unique mover name, one or more numbers, etc.), which is assigned to the recorded partial position ranges of the respective movers 31, 32. Also, the order, in which the respective different partial position ranges of the measuring scales attached to the respective movers 31, 32 were entered into the list or table, may be used as identification information ID₃₁, ID₃₂ of the respective movers 31, 32.

When the first mover 31 is moved into or within the predefined zone 7 of the transport system 1, the mover passes the read head 9, for example. The read head 9 detects or scans the second encoder track 81 of the first mover 31, which cover mover-specifically and distinctly the first partial position range (e.g., 0 to 10mm) assigned to the first mover 31. The read head 9 determines the second position information PI2 based on the detected second encoder track 81 of the first mover 31. The determined second position information may contain a position (e.g., 1,1 mm) read from the part of the measuring scale 81 attached to the mover 31, for example. The second position information PI2 is transmitted to the evaluation unit 10. The respective part of the position range (of the measuring scale) that matches the second position information PI2 detected or read in from the second encoder track 81 of the first mover 31 is looked up in the list or table stored in the memory unit 11, to determine the identification information ID₃₁ of the first mover. I.e., that the part of the position range of the measuring scale is sought for in the list or table which, for example, includes the position (e.g., 1,1 mm) contained by the second position information PI2. If the matching part of the position range of the measuring scale is found in the list or table, the linked identification information ID₃₁ is retrieved and the first mover 31 is identified. The identification information ID₃₁ of the first mover 31 can then be used to retrieve mover-specific information of the first mover 31.

Similarly, the second mover 32 can also be identified by moving it into the zone 7 of the transport system 1. The read head 9 then detects the second encoder track 82 of the second mover 32, which, for example, covers the second partial position range (e.g., 10 to 20 mm) specific for the mover. The read head 9 then determines, for example, a position (e.g., 10.1 mm) read in from the part of the measuring scale 82 attached to the second mover 32, as second position information PI2. In the evaluation unit 10, the individual partial position range matching the second position information PI2 - i.e., the position of e.g., 10.1 mm - is then determined from the stored list or table to derive the identification information ID₃₂ of the second mover 32.

In Figure 2b, the second positioning system uses identical measuring scales (e.g., identical absolute coded measuring scales, identical relative coded measuring scales, etc.) as second encoder tracks 8 attached to the movers 31, 32. I.e., that the measuring scales used all cover the same position range (e.g., 0 to 10 mm), but the position of the measuring scale 8 or second encoder track 8 on the respective mover 31, 32 is individual and mover-specific. I.e., the measuring scale 8 or second encoder track 8 is attached to the respective mover with a distinct, mover-specific offset O1, 02. The respective offset O1, O2 must be significantly higher than the measurement tolerance or the detection accuracy of the first positioning system.

If, for example, the first positioning system has a maximum measurement error of 0,1 mm, the respective offset O1, O2 has to be significantly higher than that measurement error - e.g., the respective offset 01, 02 may be 1mm. I.e., as shown in Figure 2b, that the second encoder track 8 or the measurement scale 8 is attached to the first mover with a specific first offset O1 (e.g., 0mm), the second encoder track 8 or measurement scale 8 is attached to the second mover 32 with a specific second offset O2 (e.g., 1mm), an offset of the second encoder track 8 or measurement scale 8 of a third mover (not shown in Figure 2b) may be, for example, 2mm and so on. The respective offsets O1, O2 of the respective movers 31, 32 may be recorded in a list or table, which can be stored in the memory unit 11. The list or table may also contain the identification information ID₃₁, ID₃₂ of the respective mover 31, 32, like e.g., a unique mover name, one or more numbers, etc., wherein the identification information ID₃₁, ID₃₂ of the respective mover 31, 32 is linked to the recorded mover-specific offset O1, O2. Also, the order, in which the respective individual offset O1, O2 of the second encoder tracks 8 were entered into the list or table, may be used as identification information ID₃₁, ID₃₂ of the respective mover 31, 32.

When, for example as shown in Figure 2b, the second mover 32 is moved into the zone 7 (e.g., work station) of the transport system 1, the second mover 32 may be initially positioned using the first positioning system. I.e., the sensors 5 of the first positioning system detect the first encoder track 6 of the second mover 32 and determine the first position information PI1, which can be used by the evaluation unit 10 to determine the absolute position of the second mover 32 based on the first position information P11. In parallel or almost at the same time, the read head 9 detects the second encoder track 8, which is attached to the second mover 32 with the mover-specific second offset 02, and determines the second position information PI2, which can be used by the evaluation unit 10 to additionally determine the absolute position of the second mover 32 based on the second position information PI2. By comparing the absolute position of the second mover 32 based on the first position information PI1 and the absolute position of the second mover 32 based on the second position information PI2, a deviation between the two mover positions can be determined, which is caused by the offset O2 (e.g., 1mm). For example, the determined deviation may be 0,9 mm due to the measurement error of the first positioning system. The identification information ID₃₂ of the second mover 32 may then be determined by matching the deviation between the absolute position of the second mover 32 based on the first position information PI1 and the absolute position of the second mover 32 based on the second position information PI2 with one of the offsets O1, O2 recorded in the list or table. The offset O2 recorded in the list or table may provide the identification information ID₃₂ of the second mover 32, which may be used to retrieve further information on the second mover 32 from the memory unit 11.

Assuming that extensive movements of the movers 31, 32 within the transport system 1 are possible, the absolute coded measuring scale - used as second encoder track 8, 81, 82 of the movers 31, 32 shown in Figure 2a and 2b - may be replaced by a relative coded measuring scale with reference marks or a distance coded measuring scale with reference marks, which both are used in incremental encoder systems. The reference marks may be used to define the zero position for these encoder systems.

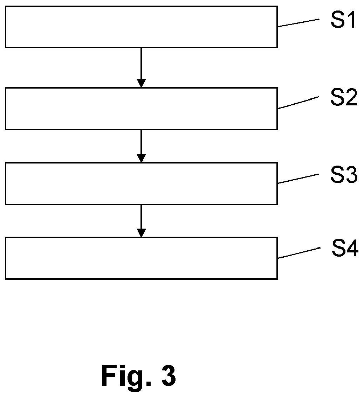

Figure 3 shows a flowchart of a method for operating the transport system 1, which comprises a stator 2 and at least one mover 3, moving with respect to the stator 2. The transport system 1 also comprises the first positioning system and the second positioning system.

When the at least one mover 3 moves, for example in a direction x of movement along the predefined transport path - defined by the transport track formed by the stator 2 or on the transport plane formed by the stator 2, the position of the mover 3, in particular the absolute position with regard to the known reference position, is determined by the first positioning system in a first measuring step S1. During the first measuring step S1 the sensors 5 of the first positioning system deliver the first position information PI1, for example in the form of sensor signals, when the mover 3, in particular the first encoder track 6 of the mover 3, moves close to and over the sensors 5. The position of the mover 3 can be determined from the first position information PI1 in the evaluation unit 10 with a given measurement tolerance, measurement error and/or accuracy grad. Methods for determining a relative or absolute mover-position from the first position information PI1, which derives from position sensor (e.g., magneto-resistive sensor, Hall effect sensors, etc.) are sufficiently known from EP 3 376 166 A1 or WO 2021/105387 A1, for example.

In a second measuring step S2 the mover 3 is moved into at least one predefined zone 7 of transport system 1. Such a predefined zone 7 may be a work station 7 arranged along the transport path, which requires more precise and more accurate positioning of the mover 3. During the second measuring step S2 the position of the mover 3 is determined using the second positioning system of the transport system 1, which provides positioning with a higher accuracy grad or with a lower measurement tolerance or a smaller maximum measurement error than the first positioning system. To determine the position of the mover 3, in particular the absolute position, the second encoder track 8 attached to the mover 3 is detected by the sensor unit 9 of the second positioning system determining the second position information PI2 during the second measuring step S2. The second position information PI2 is then transmitted to the evaluation unit 10, for example, to determine e.g., the absolute position of the mover 3 (with regard to the known reference position) using the known mounting position of the second encoder track 8 on the mover 3 and the known mounting position of the sensor unit 9 with regard to the known reference position, for example.

Since the second encoder track 8 of the mover is designed in such a way that the second position information PI2 comprises a unique, mover-specific identification information ID, the mover 3 can be identified by determining the mover-specific identification information ID from the second position information PI2 in an identification step S3, which is carried out by the evaluation unit 10, for example. The identification step S3 may, for example, be carried out in addition to the second measuring step S2 - e.g., in the at least one predefined zone 7, wherein the second measuring step S2 and the identification step S3 may be carried out almost in parallel or almost at the same time - providing a quite precise position of the mover 3 for accurate positioning and identifying the mover 3 based on the retrieved mover-specific identification information ID. However, it is also possible that the identification step S3 is carried out separately - i.e., the second position information PI2 determined during the second measuring step S2 is only used to identify the mover 3. Details on the design or preferred embodiments of the second encoder track 8 of the mover 3 and detailed procedures, how the mover-specific identification information ID of the mover 3 may be determined from the second position information PI2 during the identification step S3 have already been described in connection with Figures 2a and 2b, and an repetition will be omitted here for the sake of clarity and conciseness.

After the mover 3 was identified in the identification step S3, the unique and mover-specific identification ID may be used to retrieve mover-specific information in the memory unit 11 in a retrieval step S4. Such mover-specific information may comprise, e.g., a reference position for precise position determination, a position of the second encoder track 8 on the mover 3, etc., which may be used to position the mover more precisely and more accurately on the transport track or transport plane of the transport system 1. Furthermore, the mover-specific information may comprise further properties of the mover 3, like, e.g., dimensions, weight, load status, maintenance data, production data, serial number of the mover 3, milage, etc., which may be used for further processing in a control unit, for example, or which may be output to a user on an output unit. The mover-specific information, which may be retrieved from the memory unit 11 using the mover-specific identification information ID may also comprise product-specific data of the product or object transported by the mover 3 and/or information on the specific production process (e.g., single piece flow). This information may also be output to a user on an output unit during the retrieval step S4 or e.g., transmitted to a control unit for further processing.

Additionally, the transport system 1, in particular the two positioning systems, may be used to determine the orientation of the mover 3, 31, 32 on the transport track. Especially, the movers 3, 31, 32 of transport systems 1 in the form of long stator linear motors are not symmetrical and therefore have designated direction. During a minimum movement of a mover 31, 32, in the zone 7 of the transport track, the respective counting direction of the first and the second positioning system may be compared. If, for example, the measuring scale 8, 81, 82 on the respective mover 3, 31, 32 is read in the wrong way by the read head 9, the orientation of the mover 3, 31, 32 on the track is possibly wrong.

## Claims

1. Transport system (1) with a fixed part or stator (2) and at least one movable part or mover (3, 31, 32), which is movable relative to the stator (2) along a predetermined transport path, the transport system (1) comprising a first positioning system with position sensors (5) arranged on the stator (2), which interact with a first encoder track (6) of the at least one mover (3) to determine a first position information (PI1), from which a position, in particular an absolute position, of the at least one mover (3) can be determined, ***characterized in that*** the transport system (1) comprises a second positioning system in at least one predetermined zone (7), the second positioning system comprising at least one sensor unit (9) which is arranged in the at least one predetermined zone (7), wherein the sensor unit (9) is set up to detect or scan a second encoder track (8, 81, 82) attached to the at least one mover (3) to determine second position information (PI2), with which the position, in particular the absolute position, of the at least one mover (3) can additionally be determined in the at least one predetermined zone (7) with a higher accuracy grad than with the first position information (PI1) determined by the first positioning system, and wherein the second encoder track (8, 81, 82) attached to the at least one mover (3) is designed in such a way that a unique and mover-specific identification information (ID, ID₃₁, ID₃₂) can be determined from the second position information (PI2).

2. Transport system (1) according to claim 1, ***characterized in that*** the transport system (1) comprises at least one evaluation unit (10) for determining the position of the at least one mover (3) from the first position information (PI1) and/or for determining the position of the at least one mover (3) from the second position information (PI2) and/or for determining the unique and mover-specific identification information (ID, ID₃₁, ID₃₂) from the second position information (PI2).

3. Transport system (1) according to claim 1 or 2, ***characterized in that*** the transport system (1) comprises a memory unit (11), which is integrated in the at least one evaluation unit (10) or which is designed as separate memory unit (11), wherein the memory unit (11) is used for storing mover-specific information of the at least one mover (3), which is retrievable using the unique and mover-specific identification information (ID, ID₃₁, ID₃₂).

4. Transport system (1) according to one of the previous claims, ***characterized in that*** the second positioning system is designed as linear position encoder system, wherein a read head is used as sensor unit (9) and wherein the second encoder track (8) of the at least one mover (3) is a part of a measuring scale which covers mover-specifically a distinct and individual part of the position range of the measuring scale.

5. Transport system (1) according to one of the claims 1 to 4, ***characterized in that*** the second positioning system is designed as linear position encoder system, wherein a read head is used as sensor unit (9) and wherein the second encoder track (8), which covers a position range of the measuring scale, is attached with a distinct and mover-specific offset (O1, O2) to the at least one mover (3).

6. Method for operating an electromagnetic transport system (1) comprising a fixed stator (2) and at least one mover (3), which moves in respect to the stator (2) along a predetermined transport path, wherein a first encoder track (6) attached to the at least one mover is detected or read in by position sensors (5) of a first positioning system to determine first position information (PI1), and wherein a position, in particular absolute position, of the at least one mover (3) in the transport system (1) is determined from the first position information (PI1), (S1), ***characterized in that***, in at least one predetermined zone (7) of the transport system (1), a sensor unit (9) of a second positioning system detects or reads in a unique and mover-specific second encoder track (8) attached to the at least one mover (3), wherein a second position information (PI2) is determined and wherein the position, in particular the absolute position, of the at least one mover (3) is additionally determined with a higher accuracy grad than with the first position information (PI1) determined by the first positioning system (S2), and that furthermore unique and mover-specific identification information (ID) is determined from the second position information (PI2) (S3), wherein the second position information (PI2) is derived from the mover-specifically designed second encoder track (8).

7. Method according to claim 6, ***characterized in that*** the unique and mover-specific identification information (ID) is used to retrieve mover-specific information from a memory unit (11).

8. Method according to claim 6 or 7, ***characterized in that*** a mover-specific and individual part of a position range of a measuring scale is covered by the second encoder track (8) of the at least one mover (3) and that the second position information (PI2) is matched with a list or table, in which the parts of the position range of the measuring scale used as second encoder tracks of movers are stored, to determine the unique and mover-specific identification information (ID) (S3).

9. Method according to claim 6 or 7, ***characterized in that*** the second encoder track (8) is attached with a distinct and mover-specific offset (O1, O2) to the at least one mover (3), that a deviation of a position of the at least one mover 3 in the predefined zone (7), in particular of an absolute position of the at least one mover (3), determined from the first position information (P11) of the first positioning system from the position of the at least one mover (3) in the predefined zone (7), in particular of the absolute position of the at least one mover (3), determined from the second position information (PI2) of the second positioning system is determined, and that the distinct and mover-specific offset (O1, O2) of the at least one mover (3) is derived from the deviation to determine the mover-specific identification information (ID) (S3).
